# EUROPEAN PATENT SPECIFICATION

(11) **EP 1 535 360 B1**
(45) Date of publication and mention of the grant of the patent: **15.10.2008**
(21) Application number: 03736253.0
(22) Date of filing: 26.06.2003
(51) Int. Cl.: H01M 8/02, H01M 8/24

(54) **SEPARATOR FOR SOFC WITH INTERNAL REACTANT GAS FLOW PASSAGES**
SEPARATOR FÜR FESTOXIDBRENNSTOFFZELLEN MIT INTERNEN REAKTIONSGASKANÄLEN
SEPARATEUR POUR SFOC PRESENTANT DES PASSAGES D'ECOULEMENT INTERNES DE GAZ REACTIF

(30) Priority: 28.06.2002 JP 2002190018
(43) Date of publication of application: 01.06.2005
(73) Proprietor: HONDA GIKEN KOGYO KABUSHIKI KAISHA, Minato-ku, Tokyo 107-8556 (JP)
(72) Inventor: TSUNODA, Tadashi, 1-4-1 Chuo, Wako-shi, Saitama 351-0193 (JP)
(74) Representative: Piésold, Alexander James
(86) International application number: PCT/JP2003/008100
(87) International publication number: WO 2004/004039

(56) References cited:
- EP-A- 1 037 296
- EP-A- 1 075 033
- JP-A- 11 016 581
- US-A- 4 983 472
- US-A- 5 976 332

## Description

### Technical Field

The present invention relates to a fuel cell having circular disk-shaped electrolyte electrode assemblies interposed between disk-shaped separators. Each of the electrolyte electrode assemblies includes an anode, and a cathode, and an electrolyte interposed between the anode and the cathode.

### Background Art

Typically, a solid oxide fuel cell (SOFC) employs an electrolyte of ion-conductive solid oxide such as stabilized zirconia. The electrolyte is interposed between an anode and a cathode to form an electrolyte electrode assembly. The electrolyte electrode assembly is interposed between separators (bipolar plates), and the electrolyte electrode assembly and the separators make up a unit of fuel cell for generating electricity. A predetermined number of fuel cells are stacked together to form a fuel cell stack.

In the fuel cell, an oxygen-containing gas or air is supplied to the cathode. The oxygen in the oxygen-containing gas is ionized at the interface between the anode and the electrolyte, and the oxygen ions (O²⁻) move toward the anode through the electrolyte. A fuel gas such as hydrogen-containing gas or CO is supplied to the anode. The oxygen ions react with the hydrogen in the hydrogen-containing gas to produce H₂O or react with CO to produce CO₂. Electrons released in the reaction flow through an external circuit to the cathode, creating a DC electric current.

Generally, the solid oxide fuel cell is operated at a high temperature in the range from 800°C to 1000°C. The solid oxide fuel cell utilizes the high temperature waste heat for internal reforming to produce the fuel gas, and generates electricity by spinning a gas turbine. The solid oxide fuel cell is attractive as it has the highest efficiency in generating electricity in comparison with other types of fuel cells, and receiving growing attention for potential use in vehicles in addition to the applications in combination with the gas turbine.

In order to produce a large current, a large electrolyte needs to be used. However, the flow rates of the oxygen-containing gas and the fuel gas supplied to the large electrolyte are not likely to be uniform, and the power generation performance may not be desirable. Further, the temperature distribution in the large electrolyte is not uniform. Therefore, the electrolyte may be damaged undesirably due to heat stress.

In an attempt to achieve the uniform flow rates of the oxygen-containing gas and the fuel gas supplied to the electrolyte, and the uniform temperature distribution in the electrolyte, proposals have been made to supply the fuel gas and the oxygen-containing gas outwardly from the central region of the electrolyte.

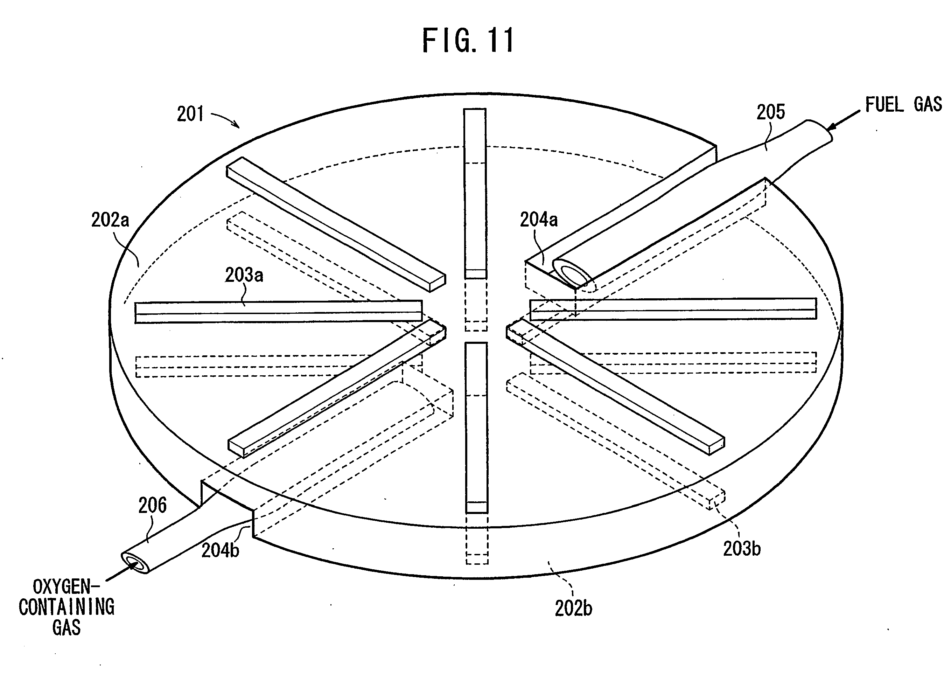

For example, Japanese Laid-Open Patent Publication No. 11-16581 (prior art 1) discloses a solid oxide fuel cell system made of a single cell. Specifically, as shown in FIG. 11, the cell includes a separator 201 having opposite main surfaces 202a, 202b. A plurality of ribs 203a are provided radially on the main surface 202a, and a plurality of ribs 203b are provided radially on the main surface 202b. Grooves 204a, 204b extend from the outside to central regions on the surfaces 202a, 202b of the separator 201, respectively. The groove 204a has a predetermined depth to place a fuel gas supply pipe 205 in the groove 204a, and the groove 204b has a predetermined depth to place an oxygen-containing gas supply pipe 206 in the groove 204b.

In the fuel cell system, the fuel gas supplied to the fuel gas supply pipe 205 flows toward the central region on the main surface 202a of the separator 201, and the oxygen-containing gas supplied to the oxygen-containing gas pipe 206 flows toward the central region on the main surface 202b of the separator 201. The fuel gas is supplied to an electrolyte electrode assembly (not shown) on the side of the main surface 202a, and flows outwardly from a central region of the electrolyte electrode assembly. The oxygen-containing gas is supplied to another electrolyte electrode assembly (not shown) on the side of main surface 202b, and flows outwardly from a central region of the other electrolyte electrode assembly.

Further, Japanese Laid-Open Patent Publication No. 5-266910 (prior art 2) discloses a solid oxide fuel cell system in which a plurality of cells are disposed on one surface (area) between adjacent separators. In the prior art 2, the plurality of cells are provided between the separators to increase the total surface area of the cells for generating a large current, while preventing damages to the electrolyte plate to improve the reliability of the fuel cell system.

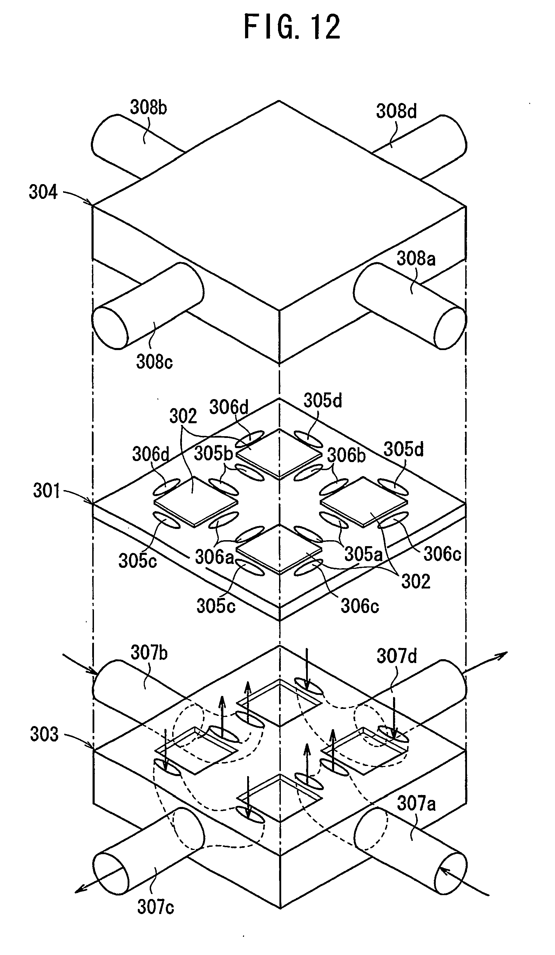

FIG. 12 is a perspective view showing the fuel cell system disclosed in the prior art 2. As shown in FIG. 12, the fuel cell system includes a plurality of layers stacked together to form a stack body. Each of the layers includes a separator 301 and four cells 302 placed on the separator 301. A fuel gas plate 303 on the lowermost layer has supply ports and discharge ports for supplying and discharging a fuel gas. An oxygen-containing gas plate 304 on the uppermost layer has supply ports and discharge ports for supplying and discharging an oxygen-containing gas.

Fuel gas supply manifolds 305a, 305b extend through the separators 301 for supplying the fuel gas to each of the cells 302, and fuel gas discharge manifolds 305c, 305d extend through the separators 301 for discharging the fuel gas from each of the cells 302 after reaction. Further, oxygen-containing gas supply manifolds 306a, 306b extend through the separators 301 for supplying the oxygen-containing gas to each of the cells 302, and oxygen-containing gas discharge manifolds 306c, 306d extend through the separators 301 for discharging the oxygen-containing gas from each of the cells 302 after reaction.

The fuel gas supply manifolds 305a, 305b are connected to fuel gas supply pipes 307a, 307b at the fuel gas plate 303. The fuel gas discharge manifolds 305c, 305d are connected to fuel gas discharge pipes 307c, 307d at the fuel gas plate 303. The oxygen-containing gas supply manifolds 306a, 306b are connected to oxygen-containing gas supply pipes 308a, 308b at the oxygen-containing gas plate 304. The oxygen-containing gas discharge manifolds 306c, 306d are connected to oxygen-containing gas discharge pipes 308c, 308d at the oxygen-containing gas plate 304.

For example, in the fuel gas plate 303 of the fuel cell system, the fuel gas supplied to the fuel gas supply pipes 307a, 307b flows into the fuel gas supply manifolds 305a, 305b of the separators 301 in the stacking direction and the fuel gas is supplied to the anode of each cell 302. After the reaction at the anode, the fuel gas flows back to the fuel gas plate 303 through the fuel gas discharge manifolds 305c, 305d, flows into the fuel gas discharge pipes 307c, 307d, and is discharged to the outside of the fuel cell system. In the oxygen-containing gas plate 304, in the similar manner, the oxygen-containing gas is supplied to, and discharged from the fuel cell system through the oxygen-containing gas plate 304.

In the prior art 1, the grooves 204a, 204b each having a predetermined depth extend from the outside to central regions on the surfaces 202a, 202b of the separator 201, respectively, for placing the fuel gas supply pipe 205 in the groove 204a, and placing the oxygen-containing gas supply pipe 206 in the groove 204b. Thus, the separator 201 is likely to be deformed or damaged due to heat stress or the like. The chemical reaction in the electrolyte electrode assemblies may not be performed uniformly due to the presence of the fuel gas supply pipe 205 and the oxygen-containing gas supply pipe 206.

In the prior art 2, the fuel gas supplied to the fuel gas plate 3 and the oxygen-containing gas supplied to the oxygen-containing gas plate 4 flow through the separators 1 in the stacking direction, and supplied to the four cells 2 on each of the separators 1. Therefore, the sealing structures for preventing the leakage of the reactant gases (fuel gas and oxygen-containing gas) are required for the separators 1 (one sealing structure is needed for every four cells 2). The sealing structures are considerably complicated in the fuel cell system.

In order to achieve the uniform chemical reaction of the fuel gas and the oxygen-containing gas in the cells 302, it is necessary to distribute the fuel gas and the oxygen-containing gas to the electrolyte electrode assemblies of the cells 302 uniformly. Therefore, the sealing structures are very complicated.

US 4983472 discloses a fuel cell having a current collector plate located between an electrode and a separate plate. The collector plate has a plurality of arches, which are of sufficient height to provide sufficient reactant flow area.

JP 11016581 discloses a separator for a solid oxide fuel cell, the separator having a cathode gas passage and an anode gas passage, and through holes for supplying anode and cathode gases to the respective electrodes. A central partition divides the fuel gas channel from the cathode gas channel.

EP 1037296 discloses a fuel cell with a disc shaped separator having two plates with an air flow passage in between them. Air flows from the periphery toward the centre of the disk along the passage, and then out of through holes to the surface of the disk and along annular passages toward the periphery.

### Disclosure of Invention

A general object of the present invention is to provide a compact and simple fuel cell having a compact sealing structure between electrolyte electrode assemblies and separators, while effectively improving the power generation performance of the fuel cell.

According to the present invention there is provided a fuel cell comprising a pair of separators and electrolyte electrode assemblies interposed between said separators, said electrolyte electrode assemblies each including an anode, a cathode, and an electrolyte interposed between said anode and cathode, wherein
each of said separators includes a first plate and a second plate stacked together;
a fuel gas channel for supplying a fuel gas to said anode, and an oxygen-containing gas channel for supplying an oxygen-containing gas to said cathode are formed between said first plate and said second plate; and
said first plate has oxygen-containing gas inlets and said second plate has fuel gas inlets for supplying said oxygen-containing gas and said fuel gas to central regions of said electrolyte electrode assemblies, wherein a partition is formed between said first plate and said second plate for dividing said fuel gas channel and said oxygen-containing gas channel,
characterised in that said partition includes a ridge protruding from said first plate to contact said second plate or a ridge protruding from the second plate to contact the first plate.

The fuel gas and the oxygen-containing gas are supplied to the electrolyte electrode assemblies, and the fuel gas and the oxygen-containing gas flow outwardly from the central regions of the electrolyte electrode assemblies. Thus, the temperature distribution in the electrolyte electrode assemblies is small, and damages to the electrolyte electrode assemblies due to heat stress are prevented. The chemical reaction is uniformly performed on the entire power generation surfaces, and the power generation efficiency is improved.

Further, the flow rate of the fuel gas supplied to the electrolyte electrode assemblies is uniform, and the utilization ratio of the fuel gas is improved. Therefore, the entire surface area of the electrolyte electrode assemblies is utilized efficiently, and the power generation performance is improved.

The fuel gas and the oxygen-containing gas are supplied to the central regions of the electrolyte electrode assemblies, and the fuel gas and the oxygen-containing gas flow radially outwardly from central regions of the electrolyte electrode assemblies. The fuel gas and the oxygen-containing gas used in the reaction are mixed together, and discharged from the electrolyte electrode assemblies as an exhaust gas.

Thus, no sealing members are required between the electrolyte electrode assemblies and the separators for separating the fuel gas and the oxygen-containing gas from the exhaust gas. In particular, the sealing structure for the separators and the electrolyte electrode assemblies interposed between the separators is very simple. Therefore, the fuel cell has a simple structure.

The partition prevents the fuel gas and the oxygen-containing gas from being mixed together between the first plate and the second plate. Thus, no complicated sealing structure is required.

With the simple structure, the fuel gas and the oxygen-containing gas are reliably supplied to the central regions of the electrolyte electrode assemblies.

According to the present invention, the electrolyte electrode assemblies may be arranged along a circle concentric with a central axis of the separators. Therefore, many electrolyte electrode assemblies can be arranged densely between the separators. With the compact structure, the power collecting efficiency is improved. Therefore, the fuel cell has a high power outputting performance.

According to the present invention, the first plate may have first bosses and the second plate may have second bosses, and the first bosses and the second bosses may protrude toward each other for sandwiching the electrolyte electrode assemblies. The electrolyte electrode assemblies are supported by the first bosses and the second*bosses with the minimum contact so as not to disturb the chemical reaction in the electrolyte electrode assemblies. The electrolyte electrode assemblies are supported by the first bosses and the second bosses such that a fuel gas flow passage and an oxygen-containing gas flow passage are formed between the electrode assemblies and the separators. Therefore, the fuel cell has a simple structure.

According to the present invention, the first bosses and the second bosses may function as current collectors for collecting electric energy produced by chemical reaction of the fuel gas and the oxygen-containing gas supplied to opposite surfaces of the electrolyte electrode assemblies. Therefore, the electric energy generated in the fuel cell can be collected reliably.

According to the present invention, a circular hole may be formed at a central region of the separators as a discharge manifold for discharging an exhaust gas in a stacking direction of the plates. The exhaust gas is produced by chemical reaction of the oxygen-containing gas and the fuel gas on the electrolyte electrode assemblies. Thus, the manifold for supplying the oxygen-containing gas and the fuel gas, and the manifold for discharging the fuel gas and the oxygen-containing gas are formed by the separators. Therefore, the fuel cell has a simple structure. Since the exhaust gas is discharged through the circular hole formed at the central region of the separators, the turbulence in the flow of the exhaust gas from the electrolyte electrode assemblies is not likely to occur, and the flow rate of the discharge gas does not change undesirably.

The above and other objects, features and advantages of the present invention will become more apparent from the following description when taken in conjunction with the accompanying drawings in which preferred embodiments of the present invention are shown by way of illustrative example.

### Brief Description of Drawings

FIG. 1 is a perspective view schematically showing a fuel cell stack formed by stacking a plurality of fuel cells according to an embodiment of the present invention;
FIG. 2 is a cross sectional view showing a part of the fuel cell stack;
FIG. 3 is a view schematically showing a gas turbine including the fuel cell stack;
FIG. 4 is an exploded perspective view of the fuel cell;
FIG. 5 is a perspective view showing a part of the fuel cell and operation of the fuel cells;
FIG. 6 is a cross sectional view, with partial omissions, showing the fuel cell stack;
FIG. 7 is an exploded perspective view showing a separator of the fuel cell;
FIG. 8 is a front view showing a plate of the separator;
FIG. 9 is a front view showing the other plate of the separator;
FIG. 10 is a view showing operation of the fuel cell;
FIG. 11 is a perspective view showing a conventional fuel cell system according to the prior art 1; and
FIG. 12 is an exploded perspective view showing a conventional fuel cell system according to the prior art 2.

### Best Mode for Carrying Out the Invention

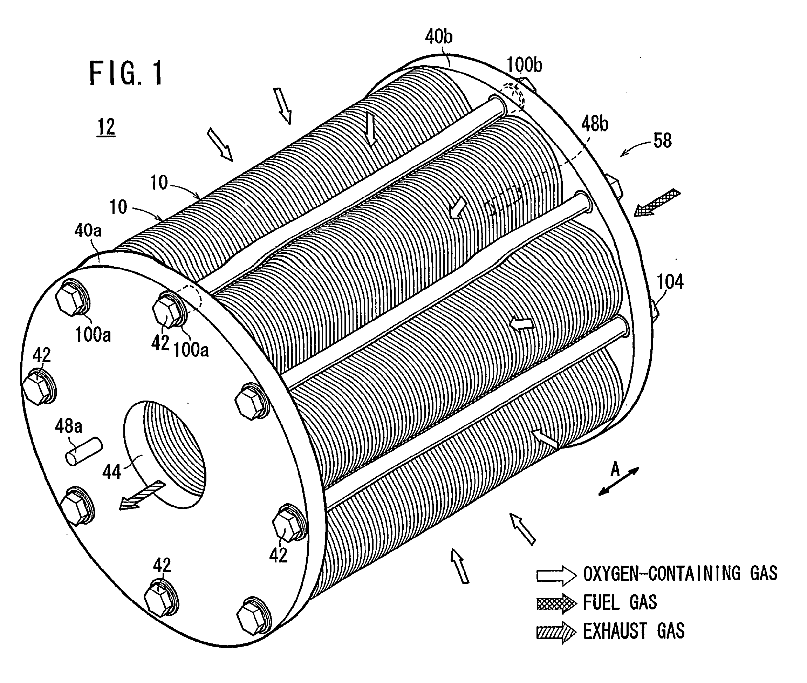

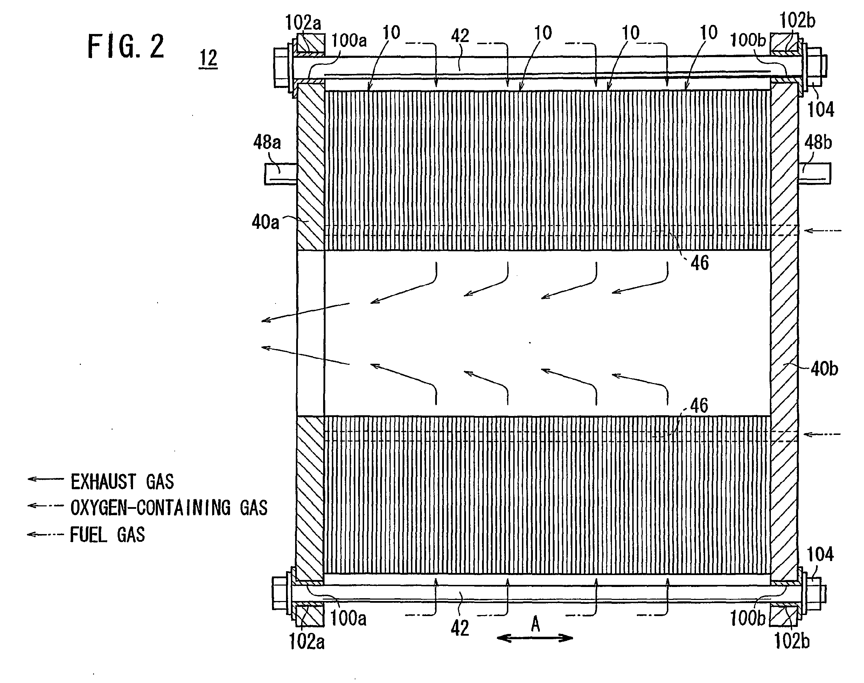

FIG. 1 is a perspective view schematically showing a fuel cell stack 12 formed by stacking a plurality of fuel cells 10 according to an embodiment of the present invention, and FIG. 2 is a cross sectional view showing a part of the fuel cell stack 12.

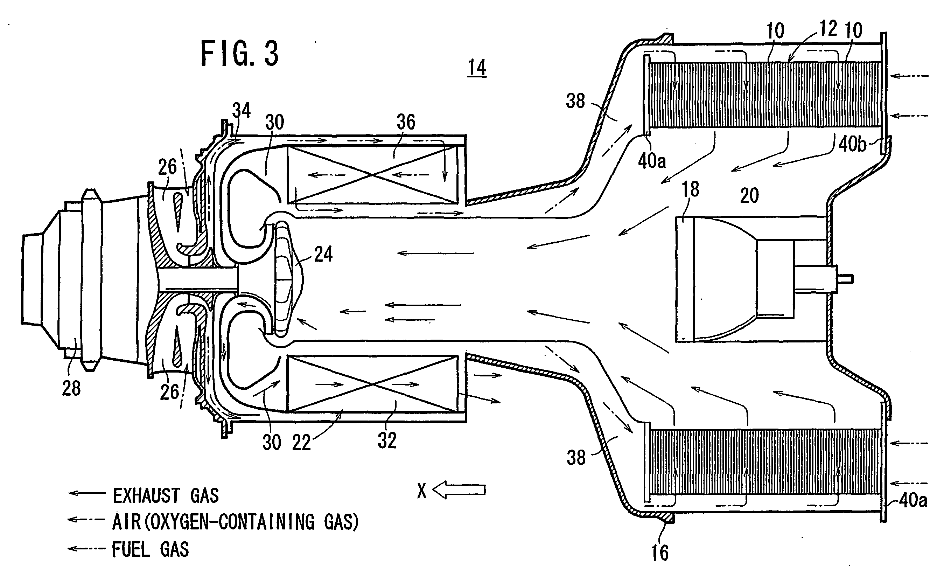

The fuel cell 10 is a solid oxide fuel cell (SOFC) for stationary and mobile applications. For example, the fuel cell 10 is mounted on vehicles. In an example of the embodiment shown in FIG. 3, the fuel cell stack 12 is used in a gas turbine 14. In FIG. 3, the shape of the fuel cell stack 12 is different from those shown in FIGS. 1 and 2, however, the structure is substantially the same.

The fuel cell stack 12 is disposed in a casing 16 of the gas turbine 14. A combustor 18 is disposed at the center of the fuel cell stack 12. The fuel cell stack 12 discharges an exhaust gas as a mixed gas of a fuel gas and an oxygen-containing gas after reaction into a chamber 20 toward the combustor 18. The chamber 20 is narrowed in a flowing direction of the exhaust gas indicated by an arrow X. A heat exchanger 22 is externally provided around the chamber 20 at a forward end in the flowing direction. Further, a turbine (power turbine) 24 is disposed at the forward end of the chamber 20. A compressor 26 and a power generator 28 are coaxially connected to the turbine 24. The gas turbine 14 has an axially symmetrical structure as a whole.

A discharge passage 30 of the turbine 24 is connected to a first passage 32 of the heat exchanger 22. A supply passage 34 of the compressor 26 is connected to a second passage 36 of the heat exchanger 22. The air is supplied to the outer circumferential surface of the fuel cell stack 12 through a hot air inlet passage 38 connected to the second passage 36.

As shown in FIG. 1, the fuel cell stack 12 is formed by stacking a plurality of fuel cells 10 in a stacking direction indicated by an arrow A. Each of the fuel cells 10 has a shape of a disk having a curved outer section. End plates 40a, 40b are provided outside the outermost fuel cells 10 at opposite ends in the stacking direction, respectively. The fuel cells 10 and the end plates 40a, 40b are tightened together by a plurality of (e.g., eight) tightening bolts 42. At the center of the fuel cell stack 12, a circular hole (discharge manifold) 44 is formed for discharging the exhaust gas from the fuel cell stack 12. The circular hole 44 has a bottom at the end plate 40b, and extends in the direction indicated by the arrow A (see FIG. 2).

A plurality of (e.g., four) fuel gas supply passages 46 are formed along a virtual circle concentric with the circular hole 44. Each of the fuel gas supply passages 46 has a bottom at the end plate 40a, and extend from the end plate 40b in the direction indicated by the arrow A. The end plates 40a, 40b have output terminals 48a, 48b, respectively.

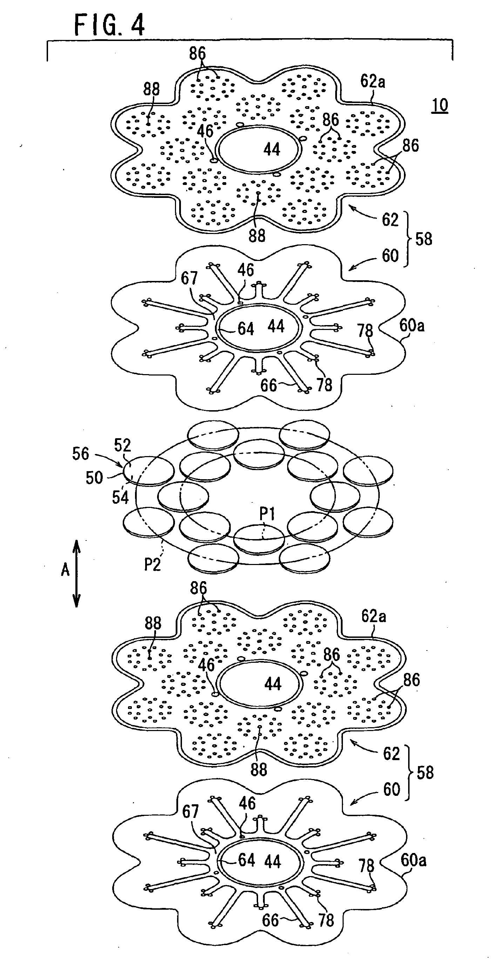

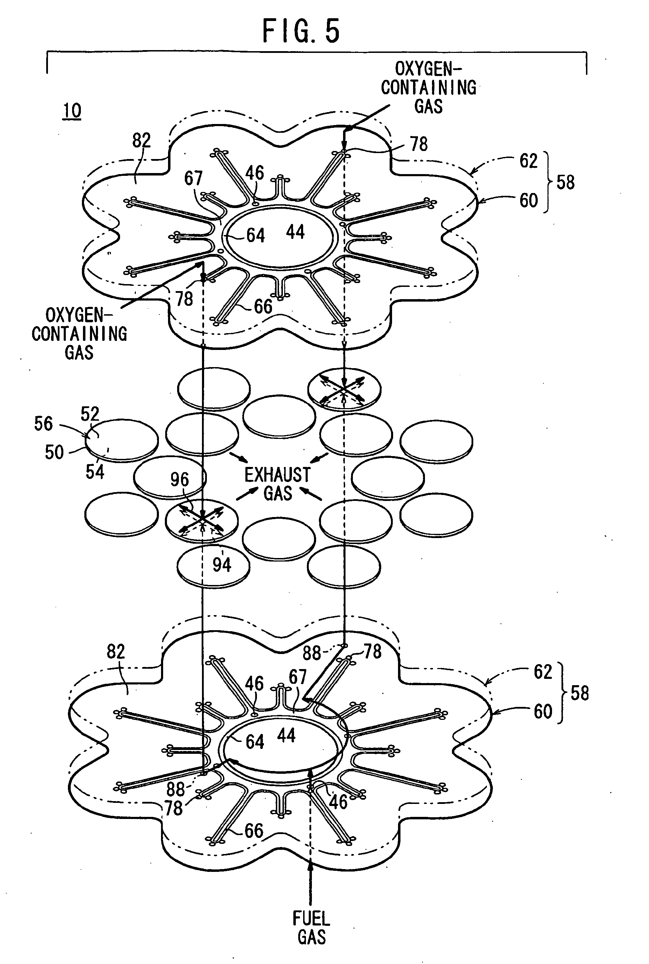

As shown in FIGS. 4 and 5, the fuel cell 10 includes electrolyte electrode assemblies 56. Each of the electrolyte electrode assemblies 56 includes a cathode 52, an anode 54, and an electrolyte (electrolyte plate) 50 interposed between the cathode 52 and the anode 54. The electrolyte 50 is formed of an ion-conductive solid oxide such as stabilized zirconia. The electrolyte electrode assembly 56 has a relatively small circular disk shape.

A plurality of (e.g., 16) the electrolyte electrode assemblies 56 are interposed between a pair of separators 58 to form the fuel cell 10. The electrolyte electrode assemblies 56 are arranged along an inner circle P1 and an outer circle P2 which are concentric with the circular hole 44 formed at the center of the separators 58. The inner circle P1 passes through centers of eight inner electrolyte electrode assemblies 56, and the outer circle P2 passes through centers of eight outer electrolyte electrode assemblies 58.

Each of the separators 58 includes a plurality of (e.g., two) plates 60, 62 which are stacked together. Each of the plates 60, 62 is formed of a stainless alloy, for example. Curved sections 60a, 62a are formed on the plates 60, 62, respectively.

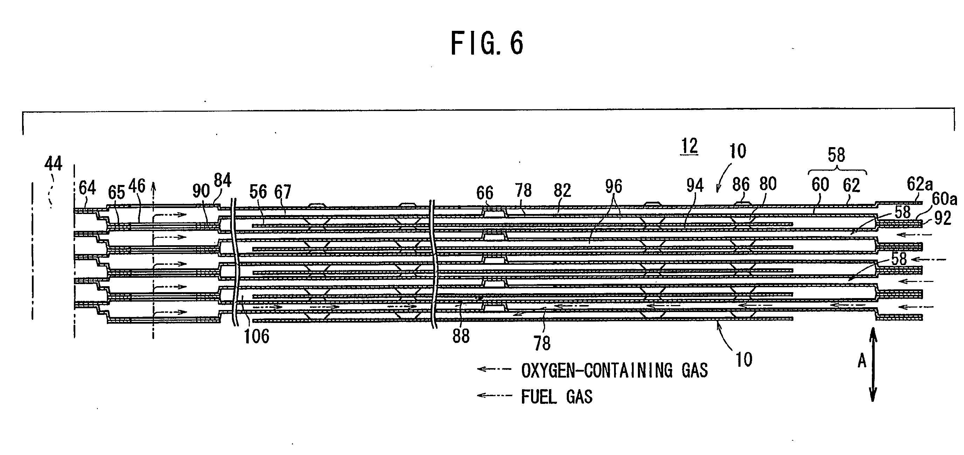

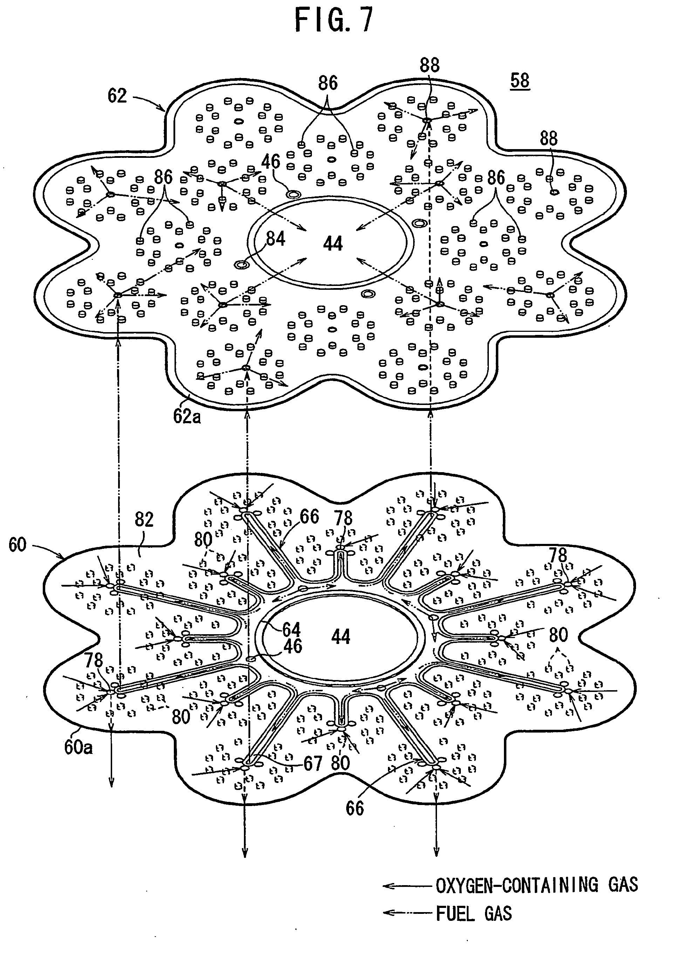

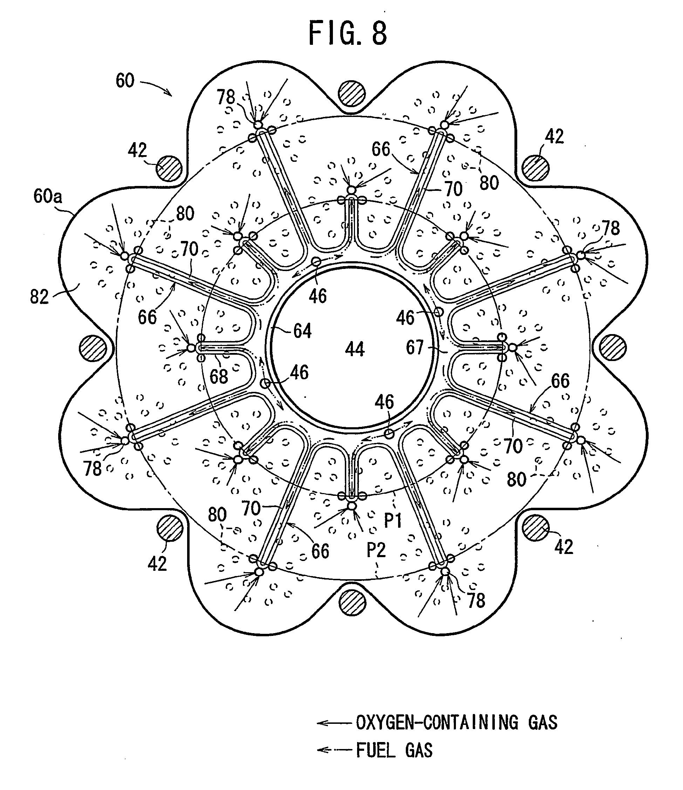

As shown in FIGS. 6 through 8, the plate 60 has an inner ridge (partition) 64 formed around the circular hole 44. The inner ridge 64 protrudes toward the plate 62. Further, the plate 60 has a protrusion 65 around the fuel gas supply passages 46. The protrusion 65 protrudes away from the plate 62. Further, the plate 60 has an outer ridge (partition) 66 formed concentrically with the inner ridge 64. A fuel gas channel 67 connected to the fuel gas supply passages 46 is formed between the inner ridge 64 and the outer ridge 66.

The outer ridge 66 includes first walls 68 and second walls 70 each extending radially outwardly by a predetermined distance. The first walls 68 and the second walls 70 are formed alternately. Each of the first walls 68 extends to the inner circle P1 which is a virtual line passing through centers of the eight inner electrolyte electrode assemblies 56. The first walls 68 are connected to the second walls 70. Each of the second walls 70 extends to the outer circle P2 which is a virtual line passing through the centers of the eight outer electrolyte electrode assemblies 56.

At each end portion of the first walls 68 and at each end portion of the second walls 70, three oxygen-containing gas inlets 78 are formed. The oxygen-containing gas inlets 78 are formed to pass through the surface of the plate 60. A first bosses 80 are formed on the plate 60. The first bosses 80 protrude toward, and contact the electrolyte electrode assemblies 56 arranged along the first circle P1 and the second circle P2.

The fuel gas channel 67 is formed inside the inner ridge 64 and the outer ridge 66 between the plate 60 and the plate 62. Further, an oxygen-containing gas channel 82 is formed outside the outer ridge 66. The oxygen-containing gas channel 82 is connected to the oxygen-containing gas inlets 78 on the plate 60. The oxygen-containing gas inlets 78 are formed along the inner circle P1 and the outer circle P2. The oxygen-containing gas inlets 78 are formed at positions corresponding to central regions of the cathodes 52 of the electrolyte electrode assemblies 56.

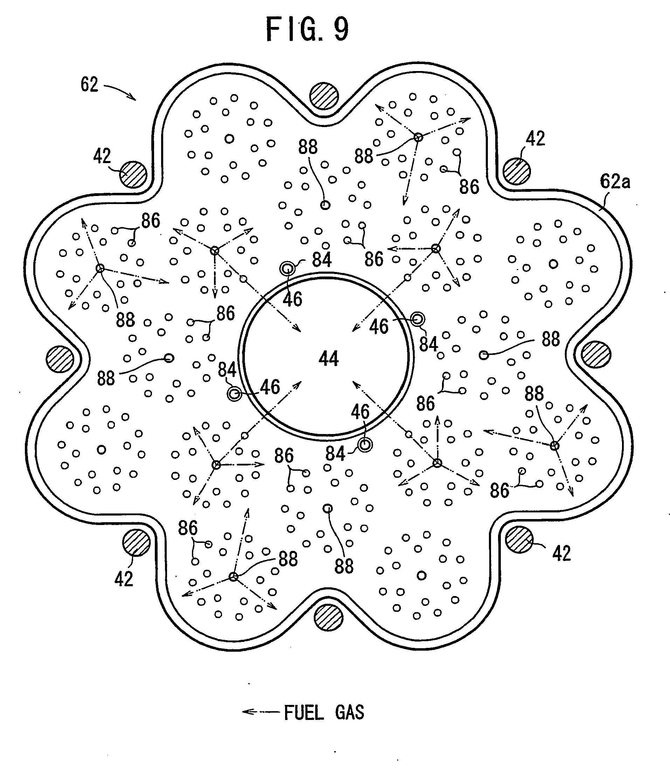

As shown in FIGS. 6, 7, and 9, the plate 62 has protrusions 84 around the respective fuel gas supply passages 46. The protrusions 84 protrude away from the plate 60. Further, the plate 62 has second bosses 86 protruding toward, and contact the electrolyte electrode assemblies 56 arranged along the inner circle P1 and the outer circle P2. The second bosses 86 have small dimensions (height and diameter) in comparison with the first bosses 80.

Fuel gas inlets 88 are formed to pass through the plate 62 to the inside of the end portions of the first wall 68 and the second wall 70, respectively. As with the oxygen-containing gas inlets 78, the fuel gas inlets 88 are formed along the inner circle P1 and the outer circle P2. The fuel gas inlets 88 are formed at positions corresponding to central regions of the anodes 54 of the electrolyte electrode assemblies 56.

The separator 58 has insulator seals 90 for sealing the fuel gas supply passages 46 (see FIG. 6). For example, the insulator seal 90 is formed by placing a ceramics plate on the plate 60 or the plate 62 or forming the insulator seal 90 on the plate 60 or the plate 62 by thermal spraying. The curved outer sections 60a, 62a protrude away from each other. An insulator seal 92 is provided on the curved outer section 60a or the curved outer section 62a by inserting the insulator seal 92 between the curved outer section 60a and the curved outer section 62a. Alternatively, the insulator seal 92 of ceramics or the like is formed on the curved outer section 60a or the curved outer section 62a by thermal spraying.

As shown in FIGS. 5 and 6, the electrolyte electrode assemblies 56 are interposed between the plate 60 of one separator 58 and the plate 62 of the other separator 58. Specifically, the plate 60 and the plate 62 outside the electrolyte electrode assemblies 56 has the first bosses 80 and the second bosses 86 protruding toward the electrolyte electrode assemblies 56 for sandwiching the electrolyte electrode assemblies 56.

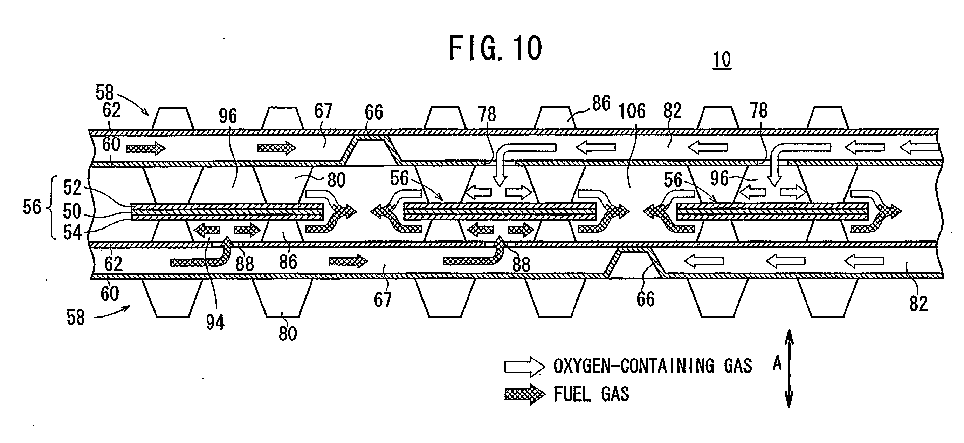

As shown in FIG. 10, a fuel gas flow passage 94 connected to the fuel gas channel 67 through the fuel gas inlets 88 is formed between the electrolyte electrode assemblies 56 and the plate 62 of the separator 58. Further, an oxygen-containing gas flow passage 96 connected to the oxygen-containing gas channel 82 through the oxygen-containing gas inlets 78 is formed between the electrolyte electrode assemblies 56 and the plate 60 of the other separator 58 on the opposite side. The size of the opening of the fuel gas flow passage 94 depends on the height of the second bosses 86. The size of the opening of the oxygen-containing gas flow passage 96 depends on the height of the first bosses 80. The flow rate of the fuel gas is smaller than the flow rate of the oxygen-containing gas. Therefore, the dimensions of the second bosses 86 are smaller than the dimensions of the first bosses 80.

As shown in FIG. 6, the fuel gas channel 67 formed between the plates 60, 62 of the separator 58 is connected to the fuel gas supply passages 46. The oxygen-containing gas channel 82 and the fuel gas channel 67 are formed on the same area inside the separator 58. The oxygen-containing gas channel 82 is open to the outside through the spacing between the curved outer sections 60a, 62a of the plates 60, 62 of the separator 58.

Each of the separators 58 stacked in the stacking direction has the first bosses 80 and the second bosses 86 for sandwiching the electrolyte electrode assemblies 56. The first bosses 80 and the second bosses 86 function as current collectors. The outer ridge 66 of the plate 60 is in contact with the plate 62 for serially connecting the fuel cells 10 in the stacking direction indicated by the arrow A.

As shown in FIGS. 1 and 2, the fuel cells 10 are stacked in the direction indicated by the arrow A. End plates 40a, 40b are disposed outside the outermost fuel cells 10 at opposite ends. The end plates 40a, 40b has holes 100a, 100b at positions corresponding to the inward curves of the curved outer sections 60a, 62a of the plates 60, 62. Insulator members 102a, 102b are attached in the holes 100a, 100b. The tightening bolts 42 are inserted in the insulator members 102a, 102b. Ends of the tightening bolts 42 are screwed into nuts 104 for tightening the fuel cells 10 together with a suitable force.

Next, operation of the fuel cell stack 12 will be described below.

In assembling the fuel cell 10, the plate 60 and the plate 62 are connected together to form the separator 58. Specifically, as shown in FIG. 6, the outer ridge 66 extending integrally from the plate 60 is connected to the plate 62 by brazing, and the ring-shaped insulator seals 90 are provided on the plate 60 or the plate 62 around the fuel gas supply passages 46 by thermal spraying, for example. Further, the insulator seal 92 having curves is provided on the curved outer section 60a of the plate 60 or the curved outer section 62a of the plate 62 by thermal spraying, for example.

The separator 58 thus formed has the fuel gas channel 67 and the oxygen-containing gas channel 82 on the same area between the plate 60 and the plate 62. The fuel gas channel 67 is connected to the fuel gas supply passages 46, and the oxygen-containing gas channel 82 between the curved outer section 60a and the curved outer section 62a is open to the outside.

Then, the electrolyte electrode assemblies 56 are interposed between a pair of separators 58. As shown in FIGS. 4 and 5, sixteen electrolyte electrode assemblies 56 are interposed between the plate 60 of one separator 58 and the plate 62 of the other separator 58. Eight electrolyte electrode assemblies 56 are arranged along the inner circle P1, and eight electrolyte electrode assemblies 56 are arranged along the outer circle P2. The first bosses 80 of the plate 60 and the second bosses 86 of the plate 62 protrude toward, and contact the electrolyte electrode assemblies 56.

As shown in FIG. 10, the oxygen-containing gas flow passage 96 is formed between the cathodes 52 of the electrolyte electrode assemblies 56 and the plate 60. The oxygen-containing gas flow passage 96 is connected to the oxygen-containing gas channel 82 through the oxygen-containing gas inlets 78. The fuel gas flow passage 94 is formed between the anodes 54 of the electrolyte electrode assemblies 56 and the plate 62. The fuel gas flow passage 94 is connected to the fuel gas channel 67 through the fuel gas inlets 88. An exhaust gas passage 106 is formed between the separators 58 for guiding the exhaust gas (mixed gas of the fuel gas and the oxygen-containing gas after reaction) to the circular hole 44.

A plurality of the fuel cells 10 as assembled above are stacked in the direction indicated by the arrow A to form the fuel cell stack 12 (see FIGS. 1 and 2).

The fuel gas such as a hydrogen containing gas is supplied to the fuel gas supply passages 46 of the end plate 40b, and the oxygen-containing gas such as air is supplied from the outside of the fuel cells 10 under pressure. The fuel gas supplied to the fuel gas supply passages 46 flows in the stacking direction indicated by the arrow A, and is supplied to the fuel gas channel 67 formed in each of the separators 58 of the fuel cells 10 (see FIG. 6).

As shown in FIG. 5, the fuel gas flows along the first walls 68 and the second walls 70 of the outer ridge 66, and flows into the fuel gas flow passage 94. The fuel gas inlets 88 are formed at end portions of the first walls 68 and the second walls 70, i.e., at positions corresponding to central regions of the anodes 54 of the electrolyte electrode assemblies 56. The fuel gas supplied to the fuel gas flow passage 94 flows outwardly from the central regions of the anodes 54 (see FIG. 10).

The oxygen-containing gas is supplied to each of the fuel cells 10 from the outside. The oxygen-containing gas is supplied to the oxygen-containing gas channel 82 formed in each of the separators 58, between the plate 60 and the plate 62. The oxygen-containing gas supplied to the oxygen-containing gas channel 82 flows into the oxygen-containing gas flow passage 96 from the oxygen-containing gas inlets 78, and flows outwardly from central regions of the cathodes 52 of the electrolyte electrode assemblies 56 (see FIGS. 5 and 10).

Therefore, in each of the electrolyte electrode assemblies 56, the fuel gas is supplied to the central region of the anode 54, and flows outwardly from the central region of the anode 54. Similarly, the oxygen-containing gas is supplied to the central region of the cathode 52, and flows outwardly from the central region of the cathode 52. The oxygen-ion passes from the cathode 52 to the anode 54 through the electrolyte 50 to generate electricity by electrochemical reactions.

In the present embodiment, the electrolyte electrode assemblies 56 are sandwiched between the first bosses 80 and the second bosses 86. Therefore, the first bosses 80 and the second bosses 86 function as current collectors. The fuel cells 10 are electrically connected in series in the stacking direction indicated by the arrow A. The electricity can be outputted from the output terminals 48a, 48b.

After reaction of the fuel gas and the oxygen-containing gas, the exhaust gas moves outwardly from the central regions of the electrolyte electrode assemblies 56 through the exhaust passage 106 between the separators 58, and flows toward the center of the separators 58. The exhaust gas flows into the circular hole 44 formed at the center of separators 58, and is discharged from the circular hole 44 to the outside. The separators 58 form the manifold for supplying the fuel gas and the oxygen-containing gas, and the manifold for discharging the fuel gas and the oxygen-containing gas. Thus, the fuel cell stack 12 has a simple structure without the need of special components. The exhaust gas is guided to the circular hole 44 at the center of the separators 58. Therefore, the turbulence of the exhaust gas discharged from the electrolyte electrode assemblies 56 does not occur, and the flow rate of the exhaust gas is kept constant.

In the first embodiment, a plurality of circular electrolyte electrode assemblies 56 having a relatively small diameter are provided between a pair of separators 58. The eight inner electrolyte electrode assemblies 56 are arranged along the inner circle P1. and the eight outer electrolyte electrode assemblies 56 are arranged along the outer circle P2. The inner circle P1 and the outer circle P2 are concentric with the circular hole 44 positioned at the center of the separators 58. The eight outer electrolyte electrode assemblies 56 are positioned out of radial alignment with the eight inner electrolyte electrode assemblies 56.

Thus, the electrolyte electrode assemblies 56 can be thin, and the resistance polarization is reduced. Further, temperature distribution is small, and damages due to heat stress are prevented. Therefore, the power generation performance of the fuel cells 10 is effectively improved. The electrolyte electrode assemblies 56 can be arranged between the separators 58 densely. Thus, the overall fuel cell 10 can be made compact, while maintaining the desired power generation performance. The overall fuel cell 10 is compact.

Each of the separators 58 has the two plates 60, 62, and the fuel gas channel 67 and the oxygen-containing gas channel 82 are formed between the plates 60, 62. In comparison with a structure in which reactant gas passages extend in the stacking direction, the sealing structure of the fuel cell 10 is greatly simplified. Thus, the reliable sealing performance is achieved desirably. Further, the overall size of the fuel cell 10 is reduced, and the improvement of the power collecting efficiency is achieved easily.

Further, in the present embodiment, the fuel gas flows from the fuel gas channel 67 into the fuel gas inlets 88 and the oxygen-containing gas flows from the oxygen-containing gas channel 82 into the oxygen-containing gas inlets 78. The fuel gas inlets 88 and the oxygen-containing gas inlets 78 are positioned at central regions on opposite surfaces of the electrolyte electrode assemblies 56 (see FIG. 10). The fuel gas and the oxygen-containing gas flow outwardly from the central regions of the electrolyte electrode assemblies 56. Therefore, the temperature distribution in the respective electrolyte electrode assemblies 56 is small, and damages due to heat stress are prevented. The electrochemical reaction is uniform on the entire power generation surface.

In the structure, the flow rate of the fuel gas supplied to each of the electrolyte electrode assemblies 56 is uniform. The utilization ratio of the fuel gas in the electrolyte electrode assembly 56 is improved, and the entire surface of the electrolyte electrode assembly 56 is used efficiently. Thus, the power generation performance is improved greatly.

The fuel gas and the oxygen-containing gas are supplied to the central regions on the opposite surfaces of the electrolyte electrode assemblies 56. The fuel gas and the oxygen-containing gas flow from the central regions on the opposite surfaces of the electrolyte electrode assemblies 56 radially outwardly. Thus, no sealing structure for the fuel gas and the oxygen-containing gas is required between the electrolyte electrode assemblies 56 and the separators 58, and the fuel cell 10 has a simple structure.

In the present embodiment, the inner ridge 64 and the outer ridge 66 are formed between the plates 60, 62 as partitions for dividing the fuel gas channel 67 and the oxygen-containing gas channel 82. Therefore, it is possible to prevent the fuel gas and the oxygen-containing gas from being mixed together between the plates 60, 62 without any special sealing structure. With the simple structure, the fuel gas and the oxygen-containing gas are reliably supplied to the central regions of the electrolyte electrode assemblies 56. Thus, the power generation performance of the fuel cell 10 is improved.

Next, the operation of the fuel cell stack 12 used in the gas turbine 14 shown in FIG. 3 will be described briefly.

As shown in FIG. 3, in starting the operation of the gas turbine 14, the combustor 18 is energized to spin the turbine 24, and energize the compressor 26 and the power generator 28. The compressor 26 functions to guide the external air into the supply passage 34. The air is pressurized and heated to a predetermined temperature (e.g., 200°C), and supplied to the second passage 36 of the heat exchanger 22.

A hot exhaust gas as a mixed gas of the fuel gas and the oxygen-containing gas after reaction is supplied to the first passage 32 of the heat exchanger 22 for heating the air supplied to the second passage 36 of the heat exchanger 22. The heated air flows through the hot air supply passage 38, and supplied to the fuel cells 10 of the fuel cell stack 12 from the outside. Thus, the power generation is performed by the fuel cells 10, and the exhaust gas generated by the reaction of the fuel gas and the oxygen-containing gas is discharged into the chamber 20 in the casing 16.

At this time, the temperature of the exhaust gas discharged from the fuel cells (solid oxide fuel cells) 10 is high, in the range of 800°C to 1000°C. The exhaust gas spins the turbine 24 for generating electricity by the power generator 28. The exhaust air is supplied to the heat exchanger 22 for heating the external air. Therefore, it is not necessary to use the combustor 18 for spinning the turbine 24.

The hot exhaust gas in the range of 800°C to 1000°C can be used for internally reforming a fuel supplied to the fuel cell stack 12. Therefore, various fuels such as natural gas, butane, and gasoline can be used for the internal reforming.

In the present embodiment, the fuel cell stack 12 is used in the gas turbine 14. However, the fuel cell stack 12 can be used in other applications. For example, the fuel cell stack 12 can be mounted on vehicles.

### Industrial Applicability

According to the present invention, each of separators for sandwiching a plurality of electrolyte electrode assemblies includes a first plate and a second plate which are stacked together, and a fuel gas channel for supplying a fuel gas to anodes of the electrolyte electrode assemblies, and an oxygen-containing gas channel for supplying an oxygen-containing gas to cathodes of the electrolyte electrode assemblies are formed between the plates. The first plate has fuel gas inlets and the second plate has oxygen-containing gas inlets for supplying the oxygen-containing gas and the fuel gas to central regions of the electrolyte electrode assemblies.

The fuel gas and the oxygen-containing gas are supplied to the electrolyte electrode assemblies, and the fuel gas and the oxygen-containing gas flow outwardly from the central regions of the electrolyte electrode assemblies. Thus, the temperature distribution in the electrolyte electrode assemblies is small, and damages to the electrolyte electrode assemblies due to heat stress are prevented. The chemical reaction is uniformly performed on the entire power generation surfaces, and the power generation efficiency is improved.

Further, the flow rate of the fuel gas supplied to the electrolyte electrode assemblies is uniform, and the utilization ratio of the fuel gas is improved. Therefore, the entire surface area of the electrolyte electrode assemblies is effectively utilized, and the power generation performance is improved.

The fuel gas and the oxygen-containing gas are supplied to the central regions of the electrolyte electrode assemblies, and the fuel gas and the oxygen-containing gas flow radially outwardly from central regions of the electrolyte electrode assemblies. The exhaust gas (mixed gas produced after reaction of the fuel gas and the oxygen-containing gas) is discharged from the electrolyte electrode assemblies.

Thus, no sealing members are required between the electrolyte electrode assemblies and the separators for separating the fuel gas and the oxygen-containing gas from the exhaust gas. Therefore, the fuel cell has a simple structure.

While the invention has been particularly shown and described with reference to preferred embodiments, it will be understood that variations and modifications can be effected thereto by those skilled in the art without departing from the scope of the invention as defined by the appended claims.

## Claims

1. A fuel cell comprising a pair of separators (58) and electrolyte electrode assemblies (56) interposed between said separators (58), said electrolyte electrode assemblies (56) each including an anode (54), a cathode (52), and an electrolyte (50) interposed between said anode (54) and cathode (52), wherein
each of said separators (58) includes a first plate (60) and a second plate (62) stacked together;
a fuel gas channel (67) for supplying a fuel gas to said anode (54), and an oxygen-containing gas channel (82) for supplying an oxygen-containing gas to said cathode (52) are formed between said first plate (60) and said second plate (62); and
said first plate (60) has oxygen-containing gas inlets (78) and said second plate (62) has fuel gas inlets (88) for supplying said oxygen-containing gas and said fuel gas to central regions of said electrolyte electrode assemblies (56), wherein a partition is formed between said first plate (60) and said second plate (62) for dividing said fuel gas channel (67) and said oxygen-containing gas channel (82), **characterised in that** said partition includes a ridge (66) protruding from said first plate (60) to contact said second plate (62) or a ridge protruding from said second plate (62) to contact said first plate (60).

2. A fuel cell according to claim 1, wherein said electrolyte electrode assemblies (56) are arranged along at a circle concentric with a central axis of said separators (58).

3. A fuel cell according to claim 1, wherein said electrolyte electrode assemblies (56) are arranged along at least two circles concentric with a central axis of said separators (58).

4. A fuel cell according to any preceding claim, wherein said first plate (60) has first bosses (80) and said second plate (62) has second bosses (86); and
said first bosses (80) and said second bosses (86) protrude toward each other for sandwiching said electrolyte electrode assemblies (66).

5. A fuel cell according to claim 4, wherein said first bosses (80) and said second bosses (86) are current collectors for collecting electric energy produced by chemical reaction of said fuel gas and said oxygen-containing gas supplied to opposite surfaces of electrolyte electrode assemblies (56).

6. A fuel cell according to any preceding claim, wherein a circular hole (44) is formed at a central region of said separators (58) as a discharge manifold for discharging an exhaust gas in a stacking direction of said plates, and said exhaust gas is produced by chemical reaction of said oxygen-containing gas and said fuel gas on said electrolyte electrode assemblies (56).

## Patentansprüche

1. Brennstoffzelle umfassend: ein Paar von Separatoren (58) und Elektrolytelektrodenanordnungen (56), die zwischen den Separatoren (58) angeordnet sind, wobei jede der Elektrolytelektrodenanordnungen (56) eine Anode (54), eine Kathode (52) und ein zwischen der Anode (54) und Kathode (52) angeordnetes Elektrolyt (50) umfasst, wobei
jeder der Separatoren (58) eine erste Platte (60) und eine zweite Platte (62) umfasst, die zusammen gestapelt sind;
ein Brennstoffgaskanal (67) zum Zuführen eines Brennstoffgases zu der Anode (54) und ein Kanal (82) für Sauerstoff enthaltendes Gas zum Zuführen eines Sauerstoff enthaltenden Gases zu der Kathode (52) zwischen der ersten Platte (60) und der zweiten Platte (62) gebildet sind; und
die erste Platte (60) Einlässe (78) für Sauerstoff enthaltendes Gas aufweist und die zweite Platte (62) Brennstoffgaseinlässe (88) aufweist, zum Zuführen des Sauerstoff enthaltenden Gases und des Brennstoffgases zu Zentralregionen der Elektrolytelektrodenanordnungen (56), wobei zwischen der ersten Platte (60) und der zweiten Platte (62) ein Abschnitt zum Trennen des Brennstoffgaskanals (67) und des Kanals (82) für Sauerstoff enthaltendes Gas gebildet ist,
**dadurch gekennzeichnet, dass** der Abschnitt einen Grat (66) umfasst, der von der ersten Platte (60) absteht, um die zweite Platte (62) oder einen Grat zu berühren, der von der zweiten Platte (62) absteht, um die erste Platte (60) zu berühren.

2. Brennstoffzelle nach Anspruch 1, wobei die Elektrolytelektrodenanordnungen (56) entlang eines Kreises angeordnet sind, der mit einer zentralen Achse des Separators (58) konzentrisch ist.

3. Brennstoffzelle nach Anspruch 1, wobei die Elektrolytelektrodenanordnungen (56) entlang wenigstens zweier Kreise angeordnet sind, die mit einer zentralen Achse des Separators (58) konzentrisch sind.

4. Brennstoffzelle nach einem der vorhergehenden Ansprüche, wobei die erste Platte (60) erste Ansätze (80) aufweist und die zweite Platte (62) zweite Ansätze (86) aufweist, und
die ersten Ansätze (80) und die zweiten Ansätze (86) aufeinander zu abstehen, um die Elektrolytelektrodenanordnungen (66) Sandwich-artig aufzunehmen.

5. Brennstoffzelle nach Anspruch 4, wobei die ersten Ansätze (80) und die zweiten Ansätze (86) Stromsammler zum Sammeln von elektrischer Energie sind, die durch chemische Reaktion des Brennstoffgases und des Sauerstoff enthaltenden Gases erzeugt wird, die gegenüberliegenden Flächen der Elektrolytelektrodenanordnungen (56) zugeführt werden.

6. Brennstoffzelle nach einem der vorhergehenden Ansprüche, wobei ein kreisförmiges Loch (44) zwischen einer Zentralregion des Separators (58) als eine Ausstoßverteiler gebildet ist, zum Ausstoßen eines Abgases in einer Stapelrichtung der Platten und wobei das Abgas durch chemische Reaktion des Sauerstoff enthaltenden Gases und des Brennstoffgases auf den Elektrolytelektrodenanordnungen (56) erzeugt wird.

## Revendications

1. Pile à combustible comprenant deux séparateurs (58) et des ensembles électrodes-électrolyte (56) interposés entre lesdits séparateurs (58), lesdits ensembles électrodes-électrolyte (56) comprenant chacun une anode (54), une cathode (52), et un électrolyte (50) interposé entre lesdites anode (54) et cathode (52), dans laquelle
chacun desdits séparateurs (58) comprend une première plaque (60) et une deuxième plaque (62) empilées l'une au-dessus de l'autre ;
un canal de combustible gazeux (67) pour délivrer un combustible gazeux à ladite anode (54), et un canal de gaz contenant de l'oxygène (82) pour délivrer un gaz contenant de l'oxygène à ladite cathode (52) sont formés entre ladite première plaque (60) et ladite deuxième plaque (62) ; et
ladite première plaque (60) comporte des entrées de gaz contenant de l'oxygène (78) et ladite deuxième plaque (62) comporte des entrées de combustible gazeux (88) pour délivrer ledit gaz contenant de l'oxygène et ledit combustible gazeux aux régions centrales desdits ensembles électrodes-électrolyte (56), dans laquelle une cloison est formée entre ladite première plaque (60) et ladite deuxième plaque (62) pour séparer ledit canal de combustible gazeux (67) et ledit canal de gaz contenant de l'oxygène (82), **caractérisée en ce que** ladite cloison comprend une arête (66) faisant saillie de ladite première plaque (60) pour venir en contact avec ladite deuxième plaque (62) ou une arête faisant saillie de ladite deuxième plaque (62) pour venir en contact avec ladite première plaque (60).

2. Pile à combustible selon la revendication 1, dans laquelle lesdits ensembles électrodes-électrolyte (56) sont agencés le long d'un cercle concentrique avec un axe central desdits séparateurs (58).

3. Pile à combustible selon la revendication 1, dans laquelle lesdits ensembles électrodes-électrolyte (56) sont agencés le long d'au moins deux cercles concentriques avec un axe central desdits séparateurs (58).

4. Pile à combustible selon l'une quelconque des revendications précédentes, dans laquelle ladite première plaque (60) comporte des premiers bossages (80) et ladite deuxième plaque (62) comporte des deuxièmes bossages (86) ; et
lesdits premiers bossages (80) et lesdits deuxièmes bossages (86) font saillie les uns vers les autres pour intercaler lesdits ensembles électrodes-électrolyte (56) entre eux.

5. Pile à combustible selon la revendication 4, dans laquelle lesdits premiers bossages (80) et lesdits deuxièmes bossages (86) sont des collecteurs de courant pour collecter une énergie électrique produite par une réaction chimique dudit combustible gazeux et dudit gaz contenant de l'oxygène fournis aux surfaces opposées des ensembles électrodes-électrolyte (56).

6. Pile à combustible selon l'une quelconque des revendications précédentes, dans laquelle un trou circulaire (44) est formé au niveau d'une région centrale desdits séparateurs (58) en tant que tubulure de décharge pour décharger un gaz d'échappement dans une direction d'empilage desdites plaques, et ledit gaz d'échappement est produit par une réaction chimique dudit gaz contenant de l'oxygène et dudit combustible gazeux sur lesdits ensembles électrodes-électrolyte (56).
